# FASCICULE DE BREVET EUROPEEN

(11) **EP 0 974 271 B1**
(45) Date de publication et mention de la délivrance du brevet: **12.11.2003**
(21) Numéro de dépôt: 98202483.8
(22) Date de dépôt: 23.07.1998
(51) Int. Cl.: A23G 9/28, B29C 47/38, B29C 47/08

(54) **Moyens de guidage des arbes d'un extrudeur**
Führungsmittel für Extruder-Wellen
Guiding means for extruder shafts

(43) Date de publication de la demande: 26.01.2000
(73) Titulaire: SOCIETE DES PRODUITS NESTLE S.A., 1800 Vevey (CH)
(72) Inventeur: Morand, Alfred, 60112 Milly-Sur-Therain (FR); Fallay, Patrick, 60650 Le Mont-Saint-Adrien (FR); Gianpietri, Yves, 60390 Auneuil (FR); Plessier, Alain, 60510 Bresles (FR)
(74) Mandataire: Archambault, Jean

(56) Documents cités:
- EP-A- 0 713 650
- GB-A- 2 058 954
- US-A- 4 440 511
- US-A- 5 110 284
- PATENT ABSTRACTS OF JAPAN vol. 011, no. 282 (C-446), 11 septembre 1987 & JP 62 079764 A (TECH RES ASSOC EXTRU COOK FOOD IND), 13 avril 1987
- PATENT ABSTRACTS OF JAPAN vol. 098, no. 011, 30 septembre 1998 & JP 10 151660 A (JAPAN STEEL WORKS LTD:THE), 9 juin 1998
- PATENT ABSTRACTS OF JAPAN vol. 012, no. 312 (C-523), 24 août 1988 & JP 63 084472 A (KOBE STEEL LTD), 15 avril 1988
- PATENT ABSTRACTS OF JAPAN vol. 014, no. 373 (M-1009), 13 août 1990 & JP 02 136220 A (HITACHI METALS LTD), 24 mai 1990

## Description

L'invention concerne des moyens mécaniques entrant dans la construction des extrudeurs bi-vis utilisés pour la fabrication d'un produit contenant des solides cristallisés, notamment d'un produit alimentaire congelé, en particulier de confiserie glacée aérée.

US-A-4 440 511 se rapporte à un dispositif d'extrusion bivis dans lequel des inserts (13, fig.1 et 5) sont introduits entre le corps d'extrudeur et le fourreau de guidage des vis, lesquels inserts permettent de maintenir le fourreau en position dans le corps malgré l'échauffement produit par le travail et également d'assurer un bon transfert thermique entre le corps et le fourreau, grâce au fait que ces inserts ont un coefficient de dilatation thermique supérieur à ceux du fourreau et du corps.

US-A-5 110 284 a trait à un corps pour dispositif d'extrusion bivis résistant à la corrosion, et à l'abrasion par la constitution de certaines parties du dit corps. Il n'y a pas de palier de guidage des axes de rotation des vis ni de pièces intercalaires au niveau des paliers.

JP 62 079764 se rapporte à un palier de support des axes de vis dans un extrudeur bivis situé au niveau de la tête d'extrusion dans le but de réduire l'usure et de maintenir les vis en position. Il n'y a pas de palier de guidage des axes répartis à différents endroits à l'intérieur même du fourreau sur sa longeur ni de pièces intercalaires au niveau des paliers.

EP-A-0 713 650 concerne un procédé et un dispositif de durcissement d'un mix de confiserie glacée consistant en un extrudeur bivis refroidi. Dans ce dispositif on mélange, on aère, on congèle, on refroidit et on extrude à travers une filière une composition à glacer (= mix) et dans lequel ces opérations ont lieu en continu au moyen de deux vis sans fin s'engrenant l'une dans l'autre et tournant dans le même sens dans des fourreaux munis de moyens de refroidissement, par exemple par circulation d'un fluide frigorigène. L'intérêt de ce dispositif est de produire une composition glacée avec la possibilité d'aérer et de malaxer la masse à glacer tout en la refroidissant à une température inférieure à celle que l'on pouvait obtenir auparavant, en maintenant une température de sortie basse de l'ordre de -8°C à -13°C.

Le but de l'invention est d'améliorer le dispositif du type précédent pour obtenir une bonne qualité de confiserie glacée avec un foisonnement stable sans phénomène de fluage des arbres des vis et avec un minimum d'abrasion des vis et du fourreau.

Le dispositif amélioré selon l'invention est caractérisé par le fait qu'il comprend
- des moyens de guidage des vis en rotation pour maintenir les arbres des dites vis à une distance constante l'un de l'autre et centrés par rapport aux parois des fourreaux constitués de paliers répartis le long du dispositif et
- des pièces intercalaires non refroidies placées entre les fourreaux au niveau des paliers.

L'invention sera mieux comprise en référence aux dessins annexés montrant un mode de réalisation particulier du dispositif, donné à titre d'illustration.

Aux dessins :
La figure 1 est une vue schématique en coupe verticale axiale du dispositif,
La figure 2 est une vue en coupe perpendiculaire à l'axe de la machine d'un moyen de guidage des arbres de vis,
La figure 3 est une vue en coupe axiale du dispositif, selon AA de la figure 2 montrant un moyen de guidage des arbres de vis.

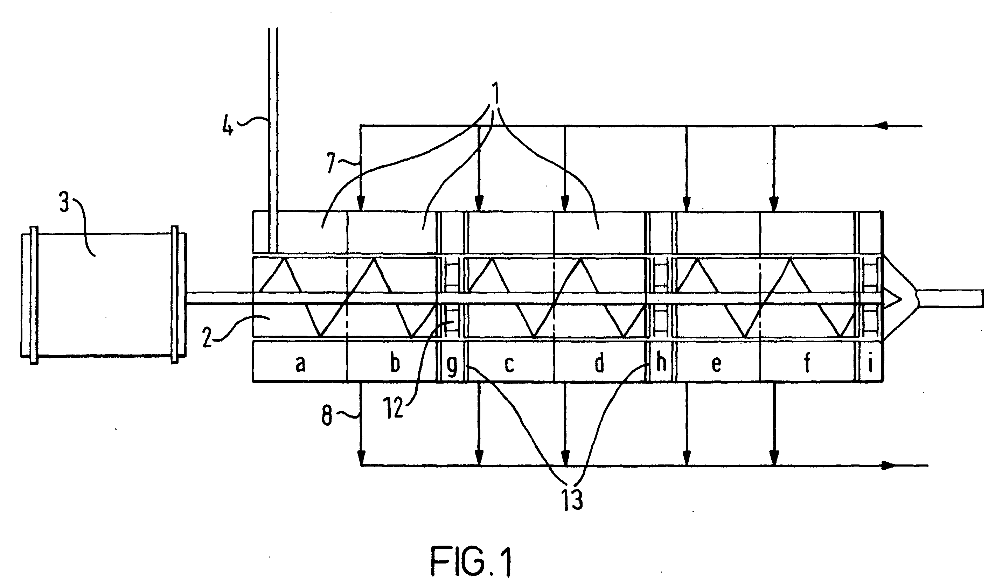

A la figure 1, le dispositif comprend une enveloppe 1 constituée de fourreaux calorifugés a à f et de pièces intercalaires g à i entourant deux vis 2 co-rotatives s'engrenant l'une dans l'autre et entramées par le moteur 3. Le mix est introduit dans le fourreau a par la conduite 4. Des circuits de refroidissement individuels dans lesquels circule un fluide frigorigène équipent les fourreaux. Dans un fourreau tel que b, le fluide frigorigène arrive par le haut ou par le bas, par le conduit 7, sous forme liquide depuis un réservoir non représenté, et sort par le côté opposé sous forme liquide ou d'un mélange liquide-vapeur par le conduit 8.

Des paliers tels que 12 sont placés entre les fourreaux b et c, d et e, et à l'extrémité de e, les paliers 12 permettent le centrage des arbres de vis entre eux et par rapport aux fourreaux comme il sera expliqué ci-après. Au niveau des paliers 12, les pièces intercalaires ne sont pas pourvues de circuit de réfrigération et sont de préférence isolées des fourreaux situés de part et d'autre par un élément isolant tel que 13. Les pièces intercalaires peuvent le cas échéant être tempérées.

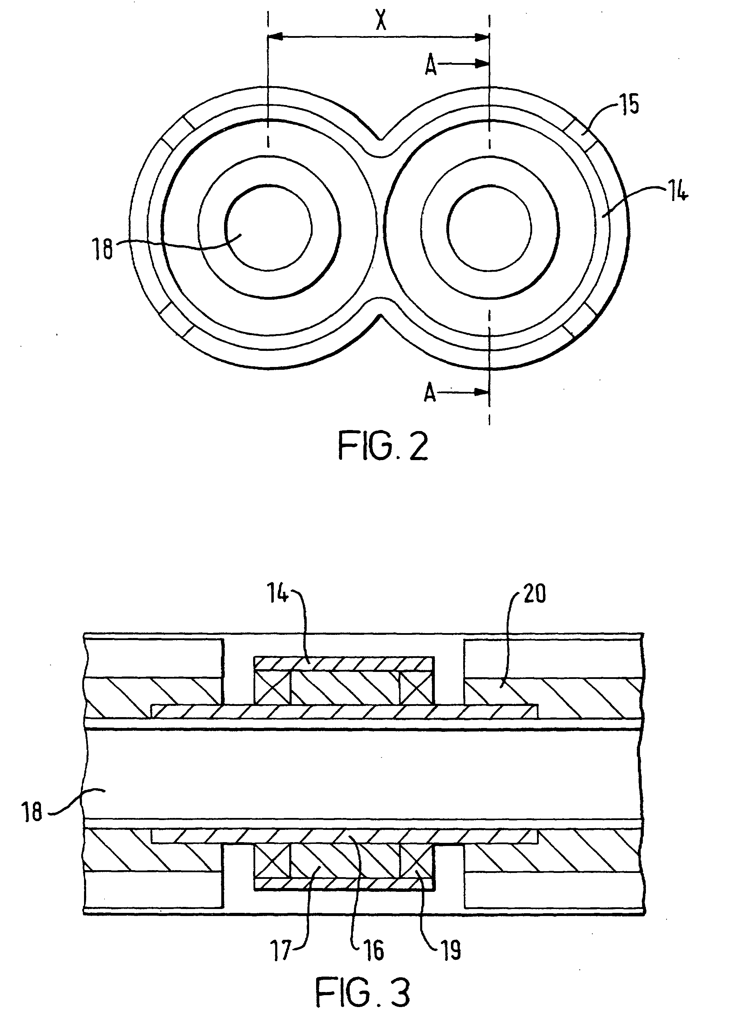

Comme montré aux figures 2 et 3, un palier de guidage 12 est constitué d'un corps 14 en forme de monture de lunette fixe venant s'insérer dans l'enveloppe et maintenu en place par les entretoises 15. Le corps 14 est percé de deux logements dont les centres correspondent à l'écartement nominal x des arbres. Ces logements, reçoivent deux roulements à rouleaux ou à aiguilles 17. Les axes creux 16 avec cannelures intérieures, constituant les parties tournantes des roulements, sont solidaires des arbres 18 cannelés. Sur les arbres sont montés les tronçons de vis 20 en forme de tubes en place par cannelures. Un montage par clavettes (non représenté) peut également être envisagé. Les arbres de vis tournent ainsi librement dans le palier 12 tout en étant maintenus centrés par rapport aux fourreaux et à distance constante l'un de l'autre malgré les efforts mécaniques radiaux exercés. Le palier est rendu étanche au produit sur les deux faces par les joints 19 et peut être autolubrifiant. Les joints 19 peuvent être par exemple du type à lèvres.

On peut en variante utiliser des paliers lisses avec gorges de lubrification, celle-ci étant assurée par le produit à traiter lui-même.

Avantageusement, les vis sont dans un matériau compatible avec le matériau constitutif de l'intérieur des fourreaux, par exemple de l'acier inoxydable. Elles peuvent être constituées de plusieurs tronçons courts ou de tronçons d'une seule pièce entre les paliers.

Dans le mode de réalisation représenté, tous les paliers sont fixes. On peut envisager que certains paliers intermédiaires soient flottants, c'est à dire qu'ils maintiennent les deux arbres à une distance fixe l'un par rapport à l'autre mais qu'ils laissent l'ensemble vis/paliers libre par rapport aux fourreaux.

Le dispositif peut comprendre par exemple 4 à 12 fourreaux et 3 à 6 paliers pour une longueur totale allant de 2 à 8 m.

## Revendications

1. Dispositif mécanique entrant dans la construction des extrudeurs bi-vis utilisés pour la fabrication d'un produit contenant des solides cristallisés, notamment un produit alimentaire congelé dans lequel on mélange, on aére, on congéle, on refroidit et on extrude à travers une filière une composition à glacer et dans lequel ces opérations ont lieu en continu au moyen de deux vis sans fin s'engrenant l'une dans l'autre et tournant dans le même sens dans une enveloppe constituée de fourreaux munis de moyens de refroidissement par circulation d'un fluide frigorigène, **caractérisé par le fait qu'**il comprend:
- des moyens de guidage des vis en rotation pour maintenir les arbres des dites vis à une distance constante l'un de l'autre et centrés par rapport aux parois des fourreaux lesdits moyens de guidage des arbres étant des paliers répartis le long du dispositif et
- des pièces intercalaires non refroidies placées entre les fourreaux au niveau des paliers.

2. Dispositif selon la revendication 1, **caractérisé par le fait que** les paliers sont des roulements étanches et autolubrifiés.

3. Dispositif selon la revendication 1, **caractérisé par le fait que** au moins une partie des paliers est insérée de manière fixe dans les fourreaux.

4. Dispositif selon la revendication 1, **caractérisé par le fait que** les tronçons de vis sont en matériau compatible avec celui des fourreaux sur le plan tribologique, notamment en acier inoxydable.

5. Dispositif selon la revendication 1, **caractérisé par le fait que** les pièces intercalaires au niveau des paliers sont constituées de matériau isolant.

6. Dispositif selon la revendication 1, **caractérisé par le fait que** les pièces intercalaires au niveau des paliers sont constituées de matériau conducteur thermiquement et donc séparées par un matériau isolant des fourreaux situés de part et d'autre.

7. Dispositif selon la revendication 1, **caractérisé par le fait que** les pièces intercalaires peuvent être tempérées au niveau des paliers.

## Patentansprüche

1. Mechanische Vorrichtung als Bestandteil von Zweischneckenextrudern für die Herstellung eines kristallisierte Feststoffe enthaltenden Produkts, insbesondere eines tiefgefrorenen Nahrungsmittelprodukts, bei denen man eine zu gefrierende Zusammensetzung mischt, belüftet, tiefgefriert, kühlt und durch eine Düse extrudiert und bei denen diese Arbeitsgänge kontinuierlich mit Hilfe von zwei Schnecken stattfinden, die miteinander kämmen und sich gleichsinnig in einem Gehäuse drehen, das aus Buchsen besteht, die mit Mitteln zum Kühlen durch Umlauf eines Kühlfluids versehen sind, **dadurch gekennzeichnet, daß** sie folgendes aufweist:
- Mittel zum Führen der Schnecken in ihrer Drehung, um die Wellen der Schnecken in einem konstanten Abstand voneinander und bezüglich der Wände der Buchsen zentriert zu halten, wobei diese Mittel zum Führen der Wellen längs der Vorrichtung verteilte Lager sind, und
- nicht gekühlte Zwischenstücke, die zwischen den Buchsen auf Höhe der Lager angeordnet sind.

2. Vorrichtung nach Anspruch 1, **dadurch gekennzeichnet, daß** die Lager dichte und selbstschmierende Wälzlager sind.

3. Vorrichtung nach Anspruch 1, **dadurch gekennzeichnet, daß** mindestens ein Teil der Lager in die Buchsen fest eingesetzt ist.

4. Vorrichtung nach Anspruch 1, **dadurch gekennzeichnet, daß** die Schneckenabschnitte aus einem Werkstoff, der mit dem der Buchsen in tribologischer Hinsicht kompatibel ist, insbesondere aus rostfreiem Stahl, bestehen.

5. Vorrichtung nach Anspruch 1, **dadurch gekennzeichnet, daß** die Zwischenstücke auf Höhe der Lager aus einem isolierenden Werkstoff bestehen.

6. Vorrichtung nach Anspruch 1, **dadurch gekennzeichnet, daß** die Zwischenstücke auf Höhe der Lager aus einem thermisch leitenden Werkstoff bestehen und deshalb durch einen isolierenden Werkstoff von den zu beiden Seiten gelegenen Buchsen getrennt sind.

7. Vorrichtung nach Anspruch 1, **dadurch gekennzeichnet, daß** die Zwischenstücke auf Höhe der Lager temperiert sein können.

## Claims

1. A mechanical device forming part of the construction of twin-screw extruders used for manufacturing a product containing crystallised solids, in particular a frozen food product, in which a composition to be frozen is mixed, aerated, frozen, cooled and extruded through a die and in which these operations are performed continuously by means of two endless screws intermeshing with one another and rotating in the same direction in a casing formed by sleeves provided with means for cooling through circulation of a refrigerant, **characterised in that** it comprises:
- means for guiding the rotating screws to maintain the shafts of said screws at a constant distance from one another and centred with respect to the walls of the sleeves, said means for guiding the shafts being bearings distributed along the device, and
- parts which are not cooled interposed between the sleeves at the locations of the bearings.

2. Device according to Claim 1, **characterised in that** the bearings are sealed, self-lubricating rolling bearings.

3. Device according to Claim 1, **characterised in that** at least a part of the bearings is housed in a fixed manner in the sleeves.

4. Device according to Claim 1, **characterised in that** the screw sections are made of a material compatible with that of the sleeves with regard to tribology, in particular of stainless steel.

5. Device according to Claim 1, **characterised in that** the parts interposed at the locations of the bearings are made of an insulating material.

6. Device according to Claim 1, **characterised in that** the parts interposed at the locations of the bearings are made of heat-conducting material and are therefore separated by an insulating material from the sleeves located on both sides.

7. Device according to Claim 1, **characterised in that** the interposed parts may be tempered at the locations of the bearings.
